Europäisches Patentamt

European Patent Office

Office européen des brevets

(11) Publication number: **0 536 602 A1**

# EUROPEAN PATENT APPLICATION

(21) Application number: **92116394.5**

(22) Date of filing: **24.09.92**

(51) Int. Cl.5: **C08J 5/18**, G11B 5/704

(30) Priority: **03.10.91 JP 256797/91**
**17.03.92 JP 60561/92**

(43) Date of publication of application:
**14.04.93 Bulletin  93/15**

(84) Designated Contracting States:
**DE FR GB IT LU NL**

(71) Applicant: **DIAFOIL HOECHST CO., LTD.**
**3-2, Marunouchi 2-chome, Chiyoda-ku**
**Tokyo(JP)**

(72) Inventor: **Sakamoto, Seiji**
**1-15-9, Ogawa**
**Machida-shi, Tokyo.to(JP)**
Inventor: **Sato, Noboru**
**2-6-3, Tachibanadai, Midori-ku**
**Yokohama-shi, Kanagawa-ken(JP)**
Inventor: **Endo, Kazuo**
**3-3, Tsutsujigaoka, Midori-ku**
**Yokohama-shi, Kanagawa-ken(JP)**

(74) Representative: **TER MEER - MÜLLER -**
**STEINMEISTER & PARTNER**
**Mauerkircherstrasse 45**
**W-8000 München 80 (DE)**

(54) **Biaxially orientated polyester film.**

(57) A biaxially orientated polyester film having minute recesses based on organic particles on its surface, wherein an average diameter of the recesses is from 0.1 to 7 $\mu$m, a standard deviation of the average diameter of the recesses is from 1 to 2.0, and an area ratio of the recesses to the whole surface area of the film is from 0.05 to 10 %, which has good abrasion resistance and slip properties and is suitable as a base film of a magnetic recording medium.

EP 0 536 602 A1

Today, a biaxially orientated film of polyethylene terephthalate and polyethylene naphthalate is widely used as an industrial film, in particular, a base film of a magnetic recording medium. In the field of magnetic recording media, requirements for high density and high quality are increasing recently. As the result, it is highly desired for a base film to have excellent properties.

But, conventional films have insufficient abrasion resistance. For example, when the base film is contacted to a substrate at a high speed, abrased particles are often generated and deteriorate electromagnetic characteristics of the magnetic recording medium. In addition, a slip property of the base film is not necessarily sufficient, and a handling property is still unsatisfactory.

As one of promising techniques for solving such problems, roughening of the film surface to some extent is known and has achieved some effects. But, surface roughening is still insufficient. That is, to roughen the surface, usually organic or inorganic particles are added to the film to form minute protrusions. While the presence of the protrusions will contribute to the improvement of the surface properties, they will be peeled off to generate white powdery materials under severe running conditions. Further, the surface roughening of the base film will deteriorate the electromagnetic characteristics of the magnetic recording medium comprising such base film.

To overcome such defects, the formation of small recesses on the film surface has been tried and is known to be effective. For example, Japanese Patent Kokai Publication No. 66936/1982 and U.S. Patent No. 4,461,797 discloses the formation of recesses around protrusions as cores generated from particles by drawing the film under special drawing conditions, and Japanese Patent Kokai Publication No. 57573/1990 discloses the formation of minute recesses by blending a liner polymer such as an aliphatic polyester in a base film material.

In the former process, the protrusions generated from the particles are also present in the film and reproducibility of the recesses is not necessarily sufficient. In the latter process, the recesses having a wide distribution of sizes are generated so that a high quality film cannot be produced.

One object of the present invention is to provide a polyester film having a uniform and minute recesses on its surface.

Another object of the present invention is to provide a polyester film which is suitable as a base film of a magnetic recording medium and has good abrasion resistance and slip properties.

According to the present invention, there is provided a biaxially orientated polyester film having minute recesses based on organic particles on its surface, wherein an average diameter of the recesses is from 0.1 to 7 $\mu$m, a standard deviation of the average diameter of the recesses is from 1 to 2.0, and an area ratio of the recesses to the whole surface area of the film is from 0.05 to 10 %.

Herein, the polyester is intended to mean a polyester which is prepared from an aromatic dicarboxylic acid or its ester and a glycol and at least 80 % of repeating units of which are ethylene terephthalate units or ethylene-2,6-naphthalate units. Insofar as the above limitations are met, the polyester may comprise a third component.

Examples of the aromatic dicarboxylic acid are terephthalic acid, 2,6-naphthalenedicaboxylic acid, isophthalic acid, phthalic acid, adipic acid, sebacic acid, oxycarboxylic acids (e.g. p-oxyethoxybenzoic acid, etc.), and the like. They may be used independently or as a mixture thereof. Examples of the glycol are ethylene glycol, diethylene glycol, propylene glycol, butanediol, 1,4-cyclohexanedimethanol, neopentyl glycol and the like. They may be used independently or as a mixture thereof.

The polyester film of the present invention is a biaxially orientated single layer or multi-layer polyester film prepared from the above polyester.

While the multi-layer film may be produced by a dry lamination, co-extrusion is preferably employed for the production of the multi-layer film in view of the productivity of the film and stability of film quality.

The orientated film may be produced by a conventional method. For example, the polyester is extruded at a temperature of 270 to 320°C in a sheet form and cooled and solidified at a temperature of 40 to 90°C to form an amorphous sheet. Then, the amorphous sheet is drawn in a machine direction and a transverse direction successively or simultaneously and heat treated at a temperature of 160 to 250°C (see, for example, Japanese Patent Publication No. 5639/1955). In the drawing in the machine or transverse direction, the film can be drawn in one step or, if necessary, in multisteps. Between two adjacent drawing steps in the multistep drawing, a heat treatment step may be provided for relaxing the orientation. After biaxial drawing and before the heat treatment, the film can be redrawn. The redrawing may be in the machine direction or in the transverse direction or both.

One of the characteristics of the present invention is that at least one surface of the film has the uniform and minute recesses based on the organic particles. In some cases, peripheral parts of the recesses may protrude slightly. But the recesses of the present invention are different from the surface structures having both the recesses and the protrusons as disclosed in Japanese Patent Kokai Publication Nos. 189822/1982 and 217229/1986 which correspond to U.S. Patent Nos. 4,725,472 and 4,746,703, and have substantially no protrusions in the recessed parts.

On the surface of the polyester film of the present invention, the recesses have an average diameter of 0.1 to 7 $\mu$m, preferably 0.3 to 5 $\mu$m, and an area ratio of 0.05 to 10 %, preferably 0.1 to 5 %. When one of these parameters is lower than the above lower limit, the abrasion resistance and running properties are hardly improved. When one of these parameters exceeds the above upper limit, the surface roughness is too large so that the electromagnetic properties are deteriorated.

The average diameter of the recesses has a standard deviation of 1 to 2.0, preferably 1 to 1.5. When the standard deviation exceeds 2.0, the distribution of the diameters of the recesses is broad so that the film surface properties are deteriorated.

The surface structure of the polyester film of the present invention may be formed by adding organic particles having a comparatively sharp distribution of particle sizes and an average particle size of 0.05 to 5 $\mu$m in the polyester as a raw material.

A kind of suitable organic particle varies with the drawing conditions and/or heat treatment conditions of the film. Usually, a material of the organic particles is selected from a linear or low crosslinked polymer having a glass transition temperature of not higher than 100°C, preferably not higher than 50°C, more preferably not higher than 10°C which is prepared by polymerizing at least one monomer having an aliphatic unsaturated bond in a molecule. Examples of the monomer to be used in the present invention are ethylene; propylene; styrene; acrylic acid, methacrylic acid and their alkyl derivatives, hydroxyesters or glycidyl esters; maleic acid, maleic anhydride and their alkyl derivatives; acrylonitrile; divinylbenzene; trivinylbenzene; diallyl phthalate; ethylene glycol dimethacrylate; and the like.

Specific examples of the material of the organic particles are styrene/n-butyl acrylate/divinylbenzene copolymers, n-butyl acrylate/ethylene glycol dimethacrylate copolymers, n-butyl acrylate/polyethylene glycol dimethacrylate copolymers and the like. The organic particles may have a multi-layer structure in which a surface layer has a different structure from an inner part. The surfaces of the organic particles may be chemically or physically treated.

A shape of each particle is preferably close to a sphere or bulk form. To provide a uniform surface, a standard deviation of particle size distribution of the organic particles is 1.5 or less, preferably 1.4 or less.

Usually, the organic particles to be used in the present invention are not highly heat resistant, and they are preferably blended with the polyester directly before the film formation in order to reduce heat history. Of course, a master batch of the polyester containing the organic particles in a high concentration may be used.

When only the organic particles which provide the recesses are blended with the polyester, the film sometimes has a poor slip property. To impart the slip property, other particles which form protrusions may be used. Examples of the particles which form protrusions are organic and inorganic fine particles such as kaolin, carbon, molybdenum sulfide, calcium carbonate, barium sulfate, lithium fluoride, calcium fluoride, zeolite, calcium phosphate, silicon dioxide, titanium dioxide, and the like. Typical examples of the organic fine particles are copolymers of a monovinyl compound having only one aliphatic unsaturated bond in a molecule and a compound having at least two aliphatic unsaturated bonds in a molecule as a crosslinking component such as those disclosed in Japanese Patent Publication No. 5216/1984. Among those copolymer particles, monodisperse particles prepared by emulsion polymerization as disclosed in Japanese Patent Kokai Publication No. 217755/1984 and U.S. Patent No. 4,568,616 are preferred. Such crosslinked polymer particles have a large crosslinking degree and a high glass transition temperature and form the protrusions like the inorganic particles, when they are blended in the polyester film.

The particles which provides the protrusions have an average diameter of 0.1 to 3 $\mu$m. An amount of such particles is at most the same as and preferably a half or less of the amount of the organic particles which provide the recessions.

According to the present invention, the use of the organic particles which form the recessions on the film surface improves the abrasion resistance and the slip property of the film. Further, when the polyester film satisfies some physical properties which will be explained below, the above properties of the film are further improved and also adhesion and mechanical strength of the film can be improved. Such film having the further improved properties is particularly suitable as the base film of a magnetic tape.

When the film is a multi-layer film, a surface layer (Layer A) is characterized in the surface structure as above, while other layer (Layer B) is not limited and may be have a multi-layer structure, but preferably consists of a polyester layer.

In the case of the multi-layer film, its total thickness is from 1 to 300 $\mu$m, preferably from 4 to 100 $\mu$m, and a ratio of a thickness of the Layer A to the total thickness is from 1 to 50 %, preferably from 3 to 30 %. When the thickness of the Layer A decreases, control of the film thickness is difficult. When the thickness of the Layer A is too large, a large amount of the organic particles should be used, and transparency and heat stability of the film are deteriorated.

When the Layer A of the multi-layer film contains 80 % by mole or more of the ethylene terephthalate units, a refractive index in a thickness direction of the film is at least 1.492. When the refractive index in the thickness direction is at least 1.492, adhesion of the film to a magnetic layer increases. Preferably, the refractive index in the thickness direction is from 1.494 to 1.505. The film having such properties can be prepared by drawing the film in the machine direction at a temperature of 105 to 115°C, which is 5 to 30°C higher than a usual drawing temperature in the course of the successive biaxial drawing.

In the case of the single layer polyethylene terephthalate film, preferably a refractive index in the thickness direction is at least 1.492. When this refractive index is smaller than 1.492, the slip property and the abrasion resistance may be insufficient, even if the organic particles according to the present invention are used. Preferably, the refractive index in the thickness direction is from 1.494 to 1.505. The film having such properties can be prepared by drawing the film in the machine direction at a temperature of 105 to 115°C, which is 5 to 30°C higher than a usual drawing temperature in the course of the successive biaxial drawing. Alternatively, such film can be produced by relaxing the biaxially drawn film greatly in the transverse direction before heat treatment.

In the case of the single layer film, when a difference ($\Delta n$) between a refractive index in the transverse direction ($n_{TD}$) and that in the machine direction ($n_{MD}$) of the film is at least 0.010, the film has a good cutting property and then is suitable as a base film of a magnetic tape.

The cutting property is a property when the magnetic tape is slit with a shear cutter and the like. When the cutting property is bad, a cut area is peeled off in a line form and, in some cases, whiskers or powders are generated from the cut area. When such phenomena appear, white powder deposits on the magnetic tape so that the electromagnetic conversion is deteriorated or the drop-out occurs.

When the refractive index different $\Delta n$ is at least 0.010, preferably at least 0.020, more preferably at least 0.025, the cutting property is effectively improved. When $\Delta n$ is too large, the magnetic tape tends to have an unsuitable thermal shrinkage factor. An upper limit of $\Delta n$ is preferably 0.060.

To produce the film having the above property, the undrawn amorphous film is drawn in the machine direction at a temperature around 90°C at a draw ratio of 3 to 4 and then in the transverse direction at a temperature of 90 to 150°C at a draw ratio larger than that in the machine direction, for example, 3.5 to 6, followed by heat treatment at a temperature of 170 to 230°C.

In one preferred embodiment, the single layer or multi-layer film is strongly orientated in the machine direction. When a difference between a F5 value in the machine direction and that in the transverse direction is at least 3 kg/mm², preferably at least 4 kg/mm², the film has an excellent cutting property and suitable as a base film of the magnetic recording medium. If the difference between the F5 values is too large, the magnetic recording medium tends to have an unsuitable thermal shrinkage factor. An upper limit of the difference between the F5 values is 10 kg/mm².

Since the film of the present invention has excellent abrasion resistance, it is preferably used as a base film of the magnetic recording medium, and its characteristics appear particularly when the magnetic recording medium is a high strength thin medium for high density recording. In particular, the film having a thickness of 12 µm or less is preferred. The film comprising polyethylene terephthalate is effectively used in an application which requires a thin film with abrasion resistance having the F5 value in the machine direction of at least 12.0 kg/mm² and a thickness of at most 12.0 µm, in particular at most 10.0 µm.

The present invention will be illustrated by following Examples, which do not limit the scope of the present invention. In Examples, "parts" are by weight.

The physical properties of the particles and the polyester film and the electromagnetic properties of the video tape are measured as follows:

(1) Average particle size

Particle sizes are measured by a microscope and a particle size corresponding to a volume percentage of 50 % in terms of equivalent ball diameters is regarded as an average particle size.

(2) Average diameter of recesses and its standard deviation

A surface of a film is observed using an optical microscope or an electron microscope. With arbitrarily selected 100 recesses, an area of each recess is converted to a circle having the same area and an equivalent diameter $X_i$ is calculated. An average diameter and its standard deviation are calculated according to the following formulas:

$$\text{Average diameter } (\bar{X}) = \frac{\sum_{i=1}^{n} X_i}{n}$$

$$\text{Standard deviation} = \frac{\bar{X} + \sqrt{\dfrac{\sum_{i=1}^{n} (\bar{X} - X_i)^2}{n}}}{\bar{X}}$$

wherein $X_i$ is an equivalent diameter of the i-th recess, and n is 100.

(3) Area ratio of recesses

Areas of the recesses are summed and a ratio of the summed area of the recesses to the whole film surface area is calculated.

(4) Abrasion resistance

A film is contacted to a fixed hard chromium-plated metal pin having a diameter of 6 mm at an angle of contact of 135°. Then, the film is run at a speed of 10 m/min. under tension of 200 g for 1000 m, and an amount of white powder adhered to the pin is observed and ranked according to the following criteria:

A: No adhesion of white powder
B: Adhesion of a vary small amount of white powder
C: Adhesion of a small amount of white powder
D: Adhesion of a large amount of white powder

(5) Running property

A film is contacted to a fixed hard chromium-plated metal pin having a diameter of 6 mm at an angle of contact of 135°. Then, the film is run at a speed of 1 m/min. with applying a load of 53 g at one end of the film, and a resistance is measured at the other end. From the measured resistance, a coefficient of friction is calculated according to the Euler's equation.

(6) Refractive index of film

Using an Abbe refractometer (manufactured by Atago Optical Co., Ltd.), a refractive index is measured with the sodium D line in the film thickness direction at 23°C (?).

(7) Evaluation of electromagnetic properties

⟨Production of a video tape⟩

Magnetic fine powder (200 parts), a polyurethane resin (30 parts), nitrocellulose (10 parts), a vinyl chloride-vinyl acetate copolymer (10 parts), lecitin (5 parts), cyclohexanone (100 parts), methyl isobutyl ketone (100 parts) and methyl ethyl ketone (300 parts) are mixed and dispersed in a ball mill for 48 hours, followed by the addition of a polyisocyanate compound (5 parts) to obtain a magnetic paint.

The magnetic paint is coated on a polyester film at a dry thickness of 2 $\mu$m, magnetically orientated before it is sufficiently dried and then dried.

The coated film is subjected to super calendering, slit at a width of 1/2 inch, wound around a hub and aged to obtain a video tape.

The obtained tape is contacted to a fixed hard chromium-plated metal pin having a diameter of 6 mm and a surface roughness of 3S at an angle of contact of 135°. Then, the film is run at a speed of 4 m/min. under tension of 50 g for 200 m.

The electromagnetic properties of the wound tape are measured using a NV-3700 video deck (manufactured by Matsushita Electric) as follows:

VTR head output

The video tape is run at a normal speed and a VTR head output at a measuring frequency of 4 MHz is measured by a synchroscope. The measured value is expressed as a relative value (dB) to a value of a blank (0 dB).

The number of drop-outs

On the video deck, the video tape is run at a normal speed to reproduce the video tape which records a signal of 4.4 MHz and the number of drop-outs is counted with a drop-out counter (manufactured by Okura Industries, Ltd.) for about 20 minutes. The result is expressed as the number of drop-outs per one minute.

Example 1

Preparation of organic particles

To desalted water (120 parts), a water-soluble polymerization initiator, potassium persulfate (0.3 part) and Emal O (sodium laurate manufactured by Kao Atlas Co., Ltd.) (0.004 part) as a dispersion stabilizer were added and, then, a homogeneous solution of styrene (2 parts), n-butyl acrylate (7 parts) and divinylbenzene (1 part) was added.

The mixture was heated up to 70°C in a nitrogen atmosphere while stirring and polymerized for 6 hours. A conversion was 99 %. An average particle size of the organic particles was 0.4 $\mu$m and a standard deviation of the particle sizes was 1.2, which means good monodisperse.

Then, an aqueous slurry of the organic particles was introduced in a spray drier (Model: Mobile Minor manufactured by Ashizawa Niroatomizer Co., Ltd.) and water was evaporated off to obtain dry organic particles (I).

Preparation of polyester film

Polyethylene terephthalate having an intrinsic viscosity of 0.65 and containing substantially no particles (99 parts) and the organic particles (I) prepared in the above step having the average particle size of 0.4 $\mu$m (1.0 part) were kneaded in a twin-screw extruder in which the screws rotated in the same direction (PCM-30 manufactured by Ikegai Tekko Co., Ltd.) at a kneading temperature of 285°C for a residence time of 4 minutes. The mixture was extruded in a strand form, cooled with water and chipped to obtain a master batch of polyethylene terephthalate containing the organic particles (I).

Then, the master batch and polyethylene terephthalate containing substantially no particles were blended in a weight ratio of 1:1, dried and then melt extruded at 290°C to produce an amorphous sheet.

The sheet was drawn in the machine direction at 106°C at a draw ratio of 3.7 times and in the transverse direction at 112°C at a draw ratio of 3.8 times, followed by heat treating at 220°C for 3 seconds to obtain a film having a thickness of 15 $\mu$m. The obtained film had a refractive index of 1.495 in the film thickness direction.

Preparation of magnetic tape

On the biaxially orientated film, the magnetic layer was formed in the same manner as above to produce a magnetic tape and its properties were measured.

Example 2

In the same manner as in Example 1 but using 0.2 % by weight of the organic particles (I), a film and a magnetic tape were produced, and their properties were measured.

### Example 3

In the same manner as in Example 1 but changing the composition in the preparation of the organic particles (I) to 8 parts of n-butyl acrylate and 2 parts of ethylene glycol dimethacrylate, the organic particles (II) were prepared. Then, in the same manner as in Example 1 but using the organic particles (II) in place of the organic particles (I), a film and a magnetic tape were produced, and their properties were measured.

### Example 4

In the same manner as in Example 1 but using the organic particles (II) and 0.1 % by weight of calcium carbonate having an average particle size of 0.3 $\mu$m, a film and a magnetic tape were produced, and their properties were measured.

### Comparative Examples 1, 2 and 3

In the same manner as in Example 1 but using the particles shown in Table 1, a polyester film was produced and its properties were measured.

### Comparative Example 4

In the same manner as in the preparation of the polyester film of Example 1 but using a blend of 99.5 parts of polyethylene terephthalate containing substantially no particles and 0.5 part of polyhexamethylene sebacate as raw materials, a film having a thickness of 15 $\mu$m was prepared. Different from Comparative Examples 1, 2 and 3, the film had recesses on its surface, but a distribution of the sizes of the recesses was too broad and the film was not suitable as a base film of a magnetic tape.

### Example 5

By the so-called coextrusion, the polyester containing 0.6 part of the organic particles (I) prepared in Example 1 and polyethylene terephthalate containing substantially no particles were separately extruded from two extruders, laminated and then quenched to obtain an amorphous sheet.

The sheet was drawn in the machine direction at 105°C at a draw ratio of 3.3 times, in the transverse direction at 110°C at a draw ratio of 3.4 times and again in the machine direction at 145°C at a draw ratio of 1.1 times followed by heat treating at 220°C for ____ seconds to obtain a biaxially orientated film having a total thickness of 11 $\mu$m. A thickness of the Layer A containing the organic particles was 2 $\mu$m, while a thickness of the Layer B containing substantially no particles was 9 $\mu$m.

The properties of the films were shown in Table 2 together with other measured properties.

The running properties and the abrasion resistance of the Layer A were excellent.

On the surface of the Layer B, the magnetic layer was formed to produce a magnetic tape. The tape had good properties.

### Example 6

In the same manner as in Example 5 but using the organic particles (II), a film and a magnetic tape were prepared, and their properties were measured.

### Example 7

In the same manner as in Example 5 but using, as particles to be added to the Layer A, 0.5 % by weight of the organic particles (I) and 0.1 % by weight of calcium carbonate having an average particle size of 0.2 $\mu$m, a film and a magnetic tape were produced, and their properties were measured.

### Comparative Examples 5, 6 and 7

In the same manner as in Example 5 but using the particles shown in Table 2 as the particles to be added to the Layer A, a polyester film was produced and its properties were measured.

Comparative Example 8

In the same manner as in the preparation of the polyester film of Example 5 but using a blend of 99.5 parts of polyethylene terephthalate containing substantially no particles and 0.5 part of polyhexamethylene sebacate as raw materials of the Layer A, a film having a thickness of 15 $\mu$m was prepared. Different from Comparative Examples 5, 6 and 7, the film had recesses on the surface of the Layer A, but a distribution of the sizes of the recesses was too broad and the film was not suitable as a base film of a magnetic tape.

The results are shown in Table 2.

Table 1

| Example No. | Added particles | | | Recesses on film surface | | | Film properties | | Properties of magnetic tape | |
|---|---|---|---|---|---|---|---|---|---|---|
| | Kind | Average particle size (μm) | Amount (wt.%) | Average diameter (μm) | Standard deviation | Area ratio (%) | Abrasion resistance | Running property | S/N | No. of dropouts |
| 1 | Org. particles | 0.4 | 0.5 | 3.5 | 1.2 | 2.4 | A | 0.29 | +2.5 | 0.4 |
| 2 | ↑ | 0.4 | 0.2 | 3.3 | 1.2 | 1.0 | A | 0.34 | +1.8 | 0.6 |
| 3 | ↑ | 0.5 | 0.5 | 5.0 | 1.3 | 4.5 | A | 0.30 | +2.4 | 0.5 |
| 4 | ↑ | 0.5 | 0.5 | 5.0 | 1.3 | 4.4 | A | 0.27 | +2.5 | 0.4 |
| C. 1 | $SiO_2$ | 0.7 | 0.3 | --- | --- | --- | C-D | 0.26 | 0.0 | 2.5 |
| C. 2 | $TiO_2$ | 0.3 | 0.1 | --- | --- | --- | C | 0.37 | -0.1 | 2.9 |
| C. 3 | Kaolin | 0.5 | 0.2 | --- | --- | --- | C | 0.33 | -0.9 | 3.6 |
| C. 4 | --- | --- | --- | 5.5 | 2.1 | 2.5 | A-B | 0.26 | -1.2 | 4.5 |

EP 0 536 602 A1

9

Table 2

| Example No. | Added particles | | | Recesses on film surface | | | Film properties | | Properties of magnetic tape | |
|---|---|---|---|---|---|---|---|---|---|---|
| | Kind | Average particle size (μm) | Amount (wt.%) | Average diameter (μm) | Standard deviation | Area ratio (%) | Abrasion resistance | Running property | S/N | No. of drop-outs |
| 5 | Org. particles | 0.4 | 0.6 | 3.5 | 1.2 | 2.7 | A | 0.29 | +2.5 | 0.4 |
| 6 | ↑ | 0.5 | 0.5 | 4.9 | 1.3 | 4.6 | A | 0.34 | +2.4 | 0.6 |
| 7 | ↑ | 0.4 | 0.5 | 5.0 | 1.3 | 4.5 | A | 0.30 | +2.4 | 0.5 |
| C.5 | SiO$_2$ | 0.7 | 0.3 | --- | --- | --- | C-D | 0.26 | 0.0 | 2.5 |
| C.6 | TiO$_2$ | 0.3 | 0.1 | --- | --- | --- | C | 0.37 | -0.1 | 2.9 |
| C.7 | Kaolin | 0.5 | 0.2 | --- | --- | --- | C | 0.34 | -0.9 | 3.6 |
| C.8 | --- | --- | --- | 5.7 | 2.1 | 2.5 | A-B | 0.26 | -1.2 | 4.5 |

## Claims

1. A biaxially orientated polyester film having minute recesses based on organic particles on its surface, wherein an average diameter of the recesses is from 0.1 to 7 μm, a standard deviation of the average diameter of the recesses is from 1 to 2.0, and an area ratio of the recesses to the whole surface area of the film is from 0.05 to 10 %.

2. The biaxially orientated polyester film according to claim 1, which a multi-layer film.

3. The biaxially orientated polyester film according to claim 1, wherein said polyester is one prepared from an aromatic dicarboxylic acid or its ester and a glycol.

4. The biaxially orientated polyester film according to claim 3, wherein at least 80 % of repeating units of said polyester are ethylene terephthalate units of ethylene-2,6-naphthalate units.

5. The biaxially orientated polyester film according to claim 1, wherein said average diameter of the recesses is from 0.3 to 5 $\mu$m.

6. The biaxially orientated polyester film according to claim 1, wherein said standard deviation is from 1 to 1.5.

7. The biaxially orientated polyester film according to claim 1, wherein said area ratio is from 0.1 to 5 %.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A,D | PATENT ABSTRACTS OF JAPAN<br>vol. 8, no. 230 (M-333)23 October 1984<br>& JP-A-59 111 818 ( TEIJIN KK ) 28 June 1984<br>* abstract * | 1,3 | C08J5/18<br>G11B5/704 |
| A,D | DE-A-3 219 240 (TORAY INDUSTRIES)<br>9 December  1982<br>* claims 1-4,18,19 *<br>* figures 1-2 * | 1,3-5,7 | |
| A,D | EP-A-0 125 482 (HOECHST AKTIENGESELLSCHAFT)<br>21 November 1984<br>* page 1, line 4 - line 15 *<br>* page 6, line 1 - line 9 *<br>* page 9, line 27 - page 10, line 15 *<br>* page 11, line 26 - page 12, line 15 * | 1,3-5 | |
| A | DATABASE WPIL<br>Week 8850,<br>Derwent Publications Ltd., London, GB;<br>AN 88-356369<br>& JP-A-63 265 929 (DIA FOIL KK) 2 November 1988<br>* abstract * | 1,3-5,7 | TECHNICAL FIELDS SEARCHED (Int. Cl.5 )<br><br>C08J<br>G11B<br>C08L |

The present search report has been drawn up for all claims

| Place of search | Date of completion of the search | Examiner |
|---|---|---|
| THE HAGUE | 27 JANUARY 1993 | KLOCKE S. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)